# FASCICULE DE BREVET EUROPEEN

(11) **EP 0 584 188 B1**
(45) Date de publication et mention de la délivrance du brevet: **13.12.1995**
(21) Numéro de dépôt: 92910958.5
(22) Date de dépôt: 11.05.1992
(51) Int. Cl.: C25C 1/20

(54) **PROCEDE DE DESARGENTATION PAR ELECTROLYSE**
ELEKTROLYTISCHER ENTSILBERUNGSPROZESS
ELECTROLYTIC DESILVERING PROCESS

(30) Priorité: 14.05.1991 FR 9105984
(43) Date de publication de la demande: 02.03.1994
(73) Titulaire: KODAK-PATHE, F-75594 Paris Cedex 12 (FR); EASTMAN KODAK COMPANY, Rochester, New York 14650-2201 (US)
(72) Inventeur: BERNARD, Patrick Eugène Yvon, F-71102 Chalon-sur-Saône Cédex (FR); BERTORELLI, Claude Richard Victor, F-71102 Chalon-sur-Saône Cédex (FR); MARCHAND, Alain Charles Sylvain, F-60880 Le Meux (FR)
(74) Mandataire: Buff, Michel
(86) Numéro de dépôt international: FR9200418
(87) Numéro de publication internationale: WO9220838

(56) Documents cités:
- US-A- 4 111 766
- PATENT ABSTRACTS OF JAPAN vol. 12, no. 172 (C-497)(3019) 21 Mai 1988 and JP-A-62278289
- PATENT ABSTRACTS OF JAPAN vol. 13, no. 479 (C-648)(3827) 30 October 1989 and JP-A-1188691

## Description

La présente invention concerne un procédé d'électrolyse qui permet la désargentation d'effluents photographiques.

Dans les procédés de développement photographique, des ions argent sont libérés dans les bains de traitement par exemple dans les bains de fixage ou de blanchiment-fixage. L'accumulation de ces ions argent diminue l'efficacité du traitement. Pour compenser cette dégradation, on effectue un apport constant de fixateur neuf et on évacue le fixateur usagé par trop plein vers un bac de rinçage, puis vers l'égout. D'un point de vue économique et écologique, il est souhaitable de récupérer le plus possible l'argent contenu dans ces effluents photographiques avant le rejet à l'égout.

Il est connu de réaliser la désargentation d'effluents aqueux par de nombreux procédés tels que la précipitation par exemple sous forme d'Ag₂S, et l'oxydo-réduction par exemple sur laine de fer ou par électrolyse.

Pour la récupération des métaux lourds tels que l'argent, on utilise depuis longtemps des réactions électrochimiques réalisées par exemple dans des cellules à électrodes planes, fixes ou mobiles, avec ou sans circulation d'électrolyte, des cellules à électrodes à surface développée, des cellules à électrodes volumiques, à lit fixe ou à lit fluidisé. Dans ces cellules à électrodes volumiques, l'électrolyse s'effectue en faisant circuler l'électrolyte au travers d'un lit de particules conductrices formant la cathode.

Ces électrodes désignées sous le nom d'électrodes poreuses, ou volumiques, permettent donc, à cause de leurs surfaces spécifiques élevées, de traiter des solutions ioniques diluées avec une densité de courant d'électrolyse faible et d'éviter ainsi des réactions parasites gênantes surtout lorsque la solution traitée doit être recyclée.

Le brevet européen 37 325 décrit un tel dispositif de récupération de l'argent dont le rendement est amélioré en associant une électrode poreuse radiale ou axiale à plusieurs contre électrodes.

Le défaut principal de ce type d'électrolyse réside dans le colmatage rapide du lit de particules formant l'électrode poreuse volumique. Ce colmatage peut être particulièrement rapide dans le cas du traitement de certains électrolytes, notamment les solutions d'ions argent. Pour remédier à ce problème, des électrolyses de ce type ont été effectuées à travers des lits de particules mis en état de fluidisation afin de supprimer le phénomène de colmatage. Toutefois, la conduction électrique au coeur du lit s'effectue alors dans de très mauvaises conditions et les densités de courant d'électrolyse, beaucoup plus faibles qu'en lit fixe, conduisent à des transferts de matière insuffisants, ce qui complique l'utilisation de ce processus sur un plan industriel.

Le brevet européen 329 275 décrit l'utilisation d'une cellule volumique qui permet de récupérer l'argent contenu dans des effluents photographiques ; la teneur en Ag à la sortie de la cellule est de l'ordre de 100 ppm. Cette cellule à lit fluidisé permet d'éviter les problèmes de colmatage sans remédier au problème de conduction électrique. Dans ce cas, la teneur en ions argent ne peut être inférieure à 100 ppm.

Pour remédier au colmatage de la cellule tout en conservant une bonne conduction électrique, le brevet français 2 599 758 propose une agitation intermittente de l'électrolyte dans des cellules volumiques à champ colinéaire ou radial, par pulsation dans le sens d'écoulement de l'électrolyte.

Le rejet d'argent à l'égout est un problème d'environnement dont la solution doit être envisagée en faisant l'hypothèse de l'apparition de nouvelles normes plus sévères. La technique antérieure aboutissant à rejeter à l'égout des effluents ayant une concentration en argent égale ou supérieure à 100 ppm, il est souhaitable de pouvoir envisager un procédé de désargentation qui permettrait d'obtenir une teneur en argent après traitement de désargentation bien inférieure à cette valeur par une méthode facile à mettre en oeuvre et économique, tout en évitant les problèmes de colmatage et de mauvaise conduction.

La présente invention concerne un procédé électrolytique de désargentation qui permet de rejeter à l'égout en une opération un effluent photographique ayant une teneur en ions argent inférieure à 20 ppm (c'est-à-dire bien plus faible qu'avec les procédés de la technique antérieure).

Ce procédé de désargentation s'effectue par passage d'effluents photographiques à travers une cellule d'électrolyse à champ radial comprenant au moins un compartiment anodique et un compartiment cathodique, dans lequel l'électrolyte est en circulation dans le compartiment cathodique pour récupérer l'argent par réactions électrochimiques, caractérisé en ce qu'au moins une partie de l'électrolyte recueilli à la sortie du compartiment cathodique est recyclé dans le compartiment anodique avant d'être rejeté à l'égout. La partie de l'électrolyte non recyclée peut être réutilisée dans le procédé de traitement photographique.

La présente invention peut être mise en oeuvre avec une cellule d'électrolyse classique pourvue de moyens ordinaires de recirculation des solutions, l'amélioration obtenue étant liée à des phénomènes d'électrolyse et non pas à la structure de la cellule.

Sans être lié par des considérations théoriques, il a été constaté qu'au cours de la réaction d'électrolyse, il existait une différence de pH et de concentration entre l'électrolyte contenu dans le compartiment cathodique et dans le compartiment anodique. En effet, par exemple, on a observé un pH de 7 dans le compartiment cathodique et de 4,5 dans le compartiment anodique. Selon l'invention, la circulation de l'électrolyte dans le compartiment anodique avant rejet à l'égout permet d'obtenir un pH proche de 7 dans ce compartiment anodique.

Cette augmentation du pH dans le compartiment anodique, due à la recirculation de l'électrolyte, entraîne la précipitation de l'argent sous forme de sulfure d'argent Ag₂S dans le compartiment anodique (coloration noire).

En effet, les effluents photographiques tels que les fixateurs ou les bains de blanchiment-fixage contiennent une quantité importante d'ions contenant du soufre (sulfite, sulfate, thiosulfate). Généralement, les conditions électrolytiques pour la réduction de l'argent sont déterminées de façon à éviter les réactions électrochimiques avec les ions contenant du soufre qui perturbent souvent l'électrolyse par précipitation d'Ag₂S à la cathode.

Dans la présente invention, cette précipitation de sulfure d'argent, qui est provoquée de façon inattendue dans le compartiment anodique, est volontairement utilisée afin de diminuer, avant le rejet à l'égout, la teneur en ions argent ainsi que la teneur en soufre contenue dans l'effluent. Sa mise en oeuvre dans le compartiment anodique ne perturbe pas la réduction de l'argent à la cathode.

Selon un mode de réalisation, l'électrolyse est effectuée à travers une cellule d'électrolyse à électrode poreuse. L'utilisation de cette cellule pour la récupération de l'argent contenu dans les effluents photographiques a été décrite dans le brevet européen 37 325 déposé le 25 mars 1981 au nom d'Eastman Kodak Company. Les problèmes de colmatage et de mauvaise conduction ont été résolus avec une cellule à électrode poreuse percolée et pulsée telle que décrite dans le brevet français 2 599 758. Dans la présente invention, l'agitation du lit de particules conductrices peut être mise en oeuvre de façon permanente ou intermittente par pulsation.

La figure 1 représente une vue en coupe d'une cellule d'électrolyse à champ radial selon le brevet européen 37 325, comprenant un séparateur poreux (14), une électrode poreuse centrale (11) constituée de particules conductrices et une pluralité de contre-électrodes (12). Le champ électrique à l'intérieur de la cellule est perpendiculaire à la direction de circulation de l'électrolyte (15).

La figure 2 est une représentation schématique de la cellule utilisée dans la présente invention.

La figure 3 montre la différence de désargentation avec et sans recyclage dans le compartiment anodique.

La figure 4 met en évidence la diminution de l'argent par processus électrochimique avant et après le passage dans le compartiment anodique.

Dans ce mode de réalisation particulier de la présente invention, les électrodes poreuses utilisées sont en général constituées de particules ou de granulés, de forme et de dimensions variables, selon la réaction électrochimique envisagée. Etant donné qu'on désire procéder à la récupération d'un métal par réduction cathodique, il est avantageux d'utiliser des billes de verre revêtues préalablement d'un dépôt d'argent métallique ou des billes de métal. On peut aussi utiliser des particules de carbone argentées. Le diamètre des particules est choisi en fonction des dimensions de la cellule. Lorsqu'on fait travailler la cellule d'électrolyse en lit fixe, c'est-à-dire avec une vitesse de percolation faible, il est préférable de choisir des particules de diamètre suffisamment important, par exemple compris entre 0,5 mm et 5 mm, de préférence entre 2 et 3 mm. On peut utiliser des particules de diamètre plus petit, mais l'on risque alors un colmatage rapide du lit.

Les contre-électrodes sont réalisées de façon classique. Dans le cas d'une utilisation du lit de particules comme cathode, les contre-électrodes jouent le rôle d'anodes. Elles sont réalisées en graphite, ou bien en métal. On peut par exemple utiliser des barreaux ou des cylindres de graphite, des grilles métalliques ou des fils platinés, selon le type de cellule.

D'une manière générale, les électrodes sont séparées des contre-électrodes par une paroi ou une membrane permettant le passage des ions ; cette paroi est par exemple en alumine poreuse, ou en matière plastique poreuse ou d'une autre matière inerte du point de vue des réactions électrochimiques mises en jeu dans la cellule. La perméabilité de cette paroi ou de cette membrane but être sélective pour certains ions. Dans certains cas, une contre-électrode supplémentaire est avantageusement disposée dans un compartiment particulier, isolé lui aussi du lit de particules par une membrane à perméabilité sélective, ou simplement par un séparateur physique pour éviter les courts-circuits entre anode et cathode.

La régulation des potentiels d'électrodes aux extrémités du lit de particules peut être réalisée d'une façon connue au moyen d'un potentiostat. Le potentiostat fournit une tension continue aux bornes de la cellule et il maintient constante la tension entre deux points de la cellule, par exemple entre une électrode de référence et un point du lit de particules voisin de l'électrode de référence. Un potentiel de "consigne", choisi sur la courbe intensité-potentiel de la réaction électrochimique envisagée, est affiché sur le potentiostat et comparé en permanence au potentiel-solution dans le lit de particules tel qu'il est mesuré par l'électrode de référence. En fonction de l'écart enregistré entre ce potentiel et le potentiel de consigne, le régulateur du potentiostat provoque une variation du potentiel d'anode qui tend à annuler cet écart. Les perturbations ainsi compensées peuvent provenir des variations de concentrations, de vitesse d'écoulement, de température, etc.

Selon un mode de réalisation, l'électrolyte qui circule à travers l'électrode poreuse est soumis à une pulsation, de sorte que les particules du lit constituant cette électrode sont mises en état de fluidisation pendant une fraction de chaque cycle de pulsation. Ce procédé de pulsation est décrit dans la demande de brevet français 8608331.

On a pu mettre en évidence que les avantages de la présente invention n'étaient pas dus à une perte d'argent dans le système, mais qu'ils étaient liés à des phénomènes électrochimiques mis en oeuvre au cours de la recirculation selon la présente invention.

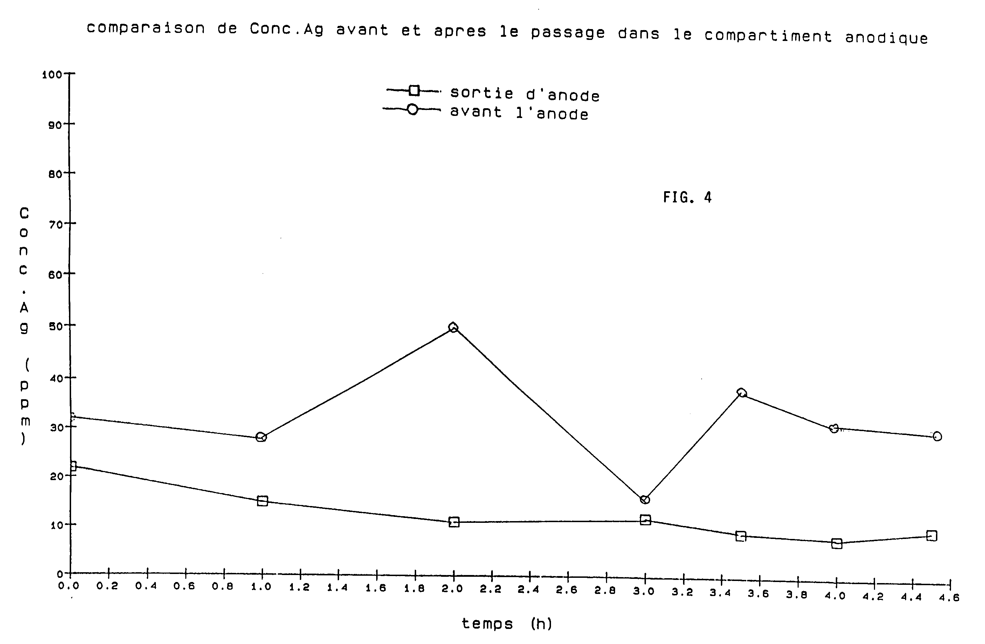

La figure 4 met en évidence la diminution de la teneur en argent au cours du recyclage par la détermination de la quantité d'argent à l'entrée et à la sortie du compartiment anodique.

Dans les conditions de fonctionnement et avec les teneurs en argent qui sont celles correspondant au traitement des effluents photographiques directement à la sortie d'une machine classique de développement à grand débit telle qu'une machine de traitement des films cinématographiques, la cellule selon la présente invention permet, comme le montrent les exemples ci-après, d'effectuer l'électrolyse avec un débit d'alimentation de 8 l/h de la solution à traiter contenant 8 g/l d'argent. Cette cellule reste efficace pour des débits d'alimentation en ions argent aussi faibles que 50 ppm/h.

Les conditions de fonctionnement qui sont données dans les exemples suivants sont directement liées à la structure et aux dimensions de la cellule utilisée. La détermination de ces conditions de fonctionnement pour une cellule d'électrolyse donnée de dimensions différentes peut être réalisée sans difficulté particulière pour l'homme de métier.

### EXEMPLES

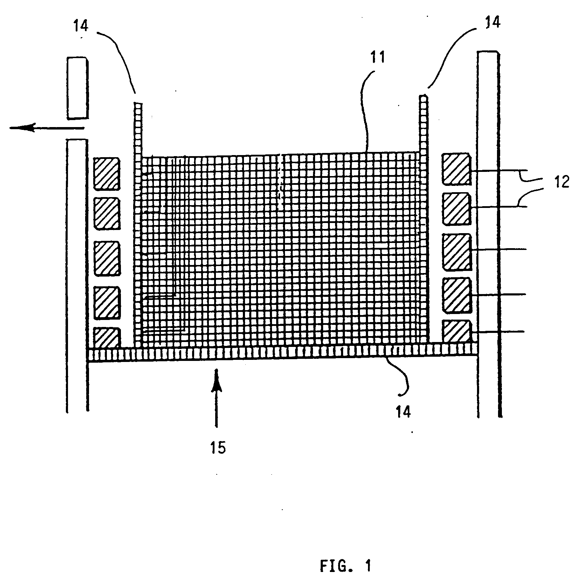

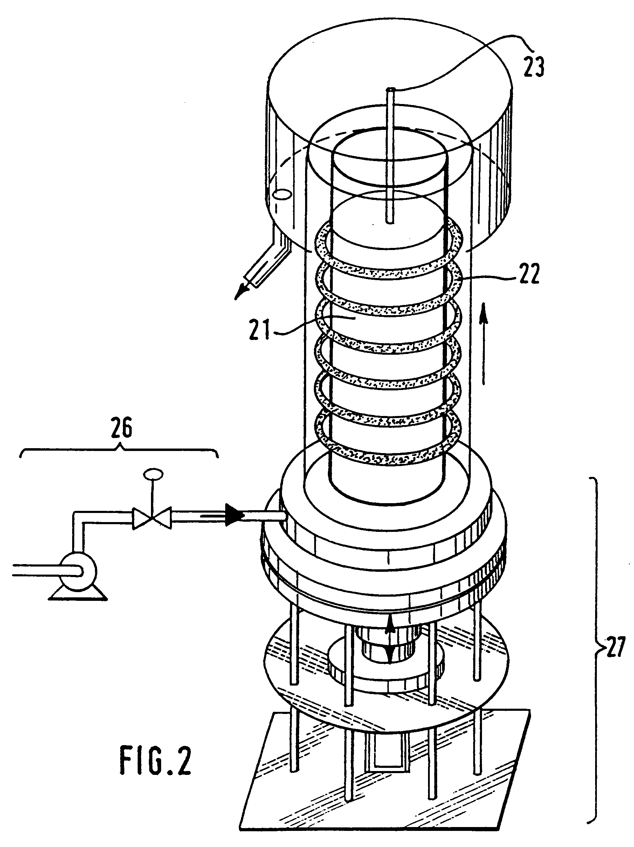

On réalise une cellule électrochimique volumique poreuse pulsée à champ radial telle que représentée à la figure 2. Elle est constituée par :
- Un compartiment cathodique (21) constitué d'un cylindre poreux (diamètre 160 mm, hauteur 200 mm) contenant des billes de carbone sur lesquelles va s'effectuer le dépôt. L'amenée de courant cathodique est ici simplement constituée d'une tige métallique centrale (23).
- Un compartiment anodique (22) renfermant l'anode formée d'une grille en inox (diamètre 180 mm) ou d'une série de couronnes en titane ruthénié.
- Un système d'alimentation (26) en solution à traiter complété par un système d'homogénéisation. L'alimentation est produite par une pompe péristaltique.
- Un système de pulsation (27) à double membrane mue par un piston, lui-même actionné par un système biellemanivelle. Il permet, en assurant un brassage des particules, d'une part d'éviter leur colmatage et, d'autre part, d'obtenir un dépôt uniforme.

L'effluent à traiter circule dans le compartiment cathodique avant d'être envoyé dans le compartiment anodique. Cette circulation est assurée par une pompe à turbine. La modification du débit d'électrolyte permet de contrôler la vitesse de percolation et la durée de la fluidisation.

Le rejet de l'effluent photographique après passage dans le compartiment anodique s'effectue par trop plein.

L'intensité de courant traversant la cellule est de préférence comprise entre 100 et 500 A/m² et de préférence entre 150 et 350 A/m², et la pulsation du lit de particules est comprise entre 1 s et 10 s. Le débit de recyclage de l'électrolyte dans le compartiment anodique varie en fonction des dimensions de la cellule utilisée.

Dans les exemples suivants, l'électrolyse s'effectue selon un mode de réalisation préféré avec les paramètres de fonctionnement suivants :
Densité de courant : 310 A/m²
Pulsation : 5 s
Concentration d'argent
dans le fixateur usagé : < 8 g/l
Débit d'alimentation : 8 l/h
Débit du recyclage dans
le compartiment anodique : 1,45 m³/h
Des prélèvements avant rejet à l'égout sont effectués de façon régulière pour suivre la teneur en argent.

Les expériences ont été effectuées avec un fixateur usagé récupéré à la sortie d'une machine de développement de pellicules cinématographiques, ce qui explique les différences de concentration en Ag initiale.

### EXEMPLE COMPARATIF

On alimente la cellule d'électrolyse (conditions de fonctionnement décrites ci-dessus) avec un effluent photographique contenant 4,95 g/l d'ion argent. L'électrolyte est en circulation uniquement dans le compartiment cathodique, puis est rejeté à l'égout. Les prélèvements sont effectués toutes les 30 minutes et la concentration en argent est déterminée par une méthode de dosage par absorption atomique (ICP : Inductively coupled Plasma).

### EXEMPLE 2 (Invention)

On effectue la même expérience avec un effluent photographique contenant 6,34 g/l d'ion argent. A la sortie du compartiment cathodique, l'électrolyte est recyclé dans le compartiment anodique. Les prélèvements pour analyse sont effectués à la sortie du compartiment anodique.

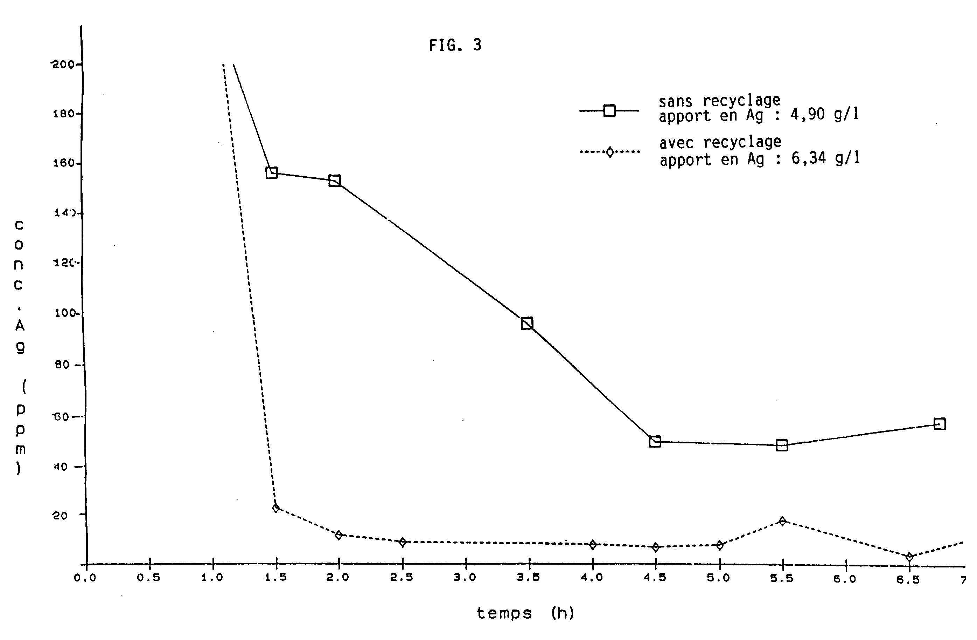

Les résultats de l'exemple 1 et de l'exemple 2 sont représentés sur la fig. 3. Après 1,5 heure de fonctionnement, la teneur en argent avant rejet obtenue par la mise en oeuvre de la présente invention est de 20 ppm alors qu'en l'absence de recyclage, la teneur en argent est supérieure à 150 ppm.

Après 4 heures de fonctionnement, la teneur en ions argent obtenue par la mise en oeuvre de l'invention est de l'ordre de 10 ppm alors que la teneur en argent sans le recyclage est supérieure à 50 ppm.

Afin de vérifier l'influence du pH sur la formation du sulfure d'argent, le pH du compartiment anodique a été modifié au cours d'un recyclage par injection d'acide sulfurique. L'électrolyte dans le compartiment anodique est passé d'un pH égal à 7 à un pH acide. On remarque alors la disparition de la coloration noire dans le compartiment anodique caractéristique des particules de sulfure d'argent.

### EXEMPLE 3

Le procédé de la présente invention est mis en oeuvre dans les conditions de fonctionnement indiquées ci-dessus et avec un effluent photographique contenant 5,8 g/l d'ions argent.

Des prélèvements sont effectués toutes les heures avant et après le passage dans le compartiment anodique. La figure 4 montre qu'il y a bien diminution de la teneur en argent entre ces deux points.

## Revendications

1. Procédé de désargentation d'effluents photographiques par électrolyse consistant à faire passer ces effluents photographiques au travers d'une cellule d'électrolyse à champ radial comprenant au moins un compartiment anodique et un compartiment cathodique, dans lequel l'électrolyte est en circulation dans le compartiment cathodique, pour récupérer l'argent par réactions électrochimiques caractérisé en ce qu'au moins une partie de l'électrolyte recueilli à la sortie du compartiment cathodique est recyclé dans le compartiment anodique avant d'être rejeté à l'égout.

2. Procédé selon la revendication 1 dans lequel la cellule d'électrolyse est une cellule volumique percolée à électrode poreuse.

3. Procédé selon la revendication 1 ou 2 dans lequel la cellule d'électrolyse est une cellule volumique percolée et pulsée à électrode poreuse.

4. Procédé selon la revendication 1, 2 ou 3 dans lequel l'intensité de courant traversant le cellule est comprise entre 100 et 500 A/m².

5. Procédé selon la revendication 4 dans lequel l'intensité de courant traversant le cellule est comprise entre 150 et 350 A/m².

6. Procédé selon l'une quelconque des revendications précédentes dans lequel l'effluent photographique est un fixateur.

7. Procédé selon l'une quelconque des revendications précédentes dans lequel l'effluent photographique est un bain de blanchiment fixage.

8. Procédé selon l'une quelconque des revendications précédentes dans lequel la cellule est alimentée directement avec l'effluent photographique issu de la machine de développement.

9. Procédé selon l'une quelconque des revendications précédentes dans lequel la partie de l'électrolyte non recyclée dans le compartiment anodique peut être réutilisée dans le procédé de traitement photographique.

## Claims

1. A process for electrolytically desilvering photographic effluents, which comprises the step to circulate said photographic effluents through an electrolytic cell wherein the electric field is perpendicular to the direction of circulation of electrolyte, comprising at least one anodic compartment and one cathodic compartment, whereby the electrolyte is circulated in the cathodic compartment to recover silver by electrolytic reactions,
characterized in that at least a part of the electrolyte leaving the cathodic compartment is recirculated in the anodic compartment before said electrolyte is discharged in the sewer.

2. A process according to claim 1 wherein the electrolytic cell is a percolated cell with a porous electrode.

3. A process according to claim 1 or 2 wherein the electrolytic cell is a pulsed and percolated cell with a porous electrode.

4. A process according to claim 1, 2 or 3 wherein the current density is in the range of from 100 to 500 A/m².

5. A process according to claim 4 wherein the current density is in the range of from 150 to 350 A/m².

6. A process according to any of the preceding claims wherein the photographic effluent is a fixing bath.

7. A process according to any of the preceding claims wherein the photographic effluent is a bleach-fixing bath.

8. A process according to any of the preceding claims wherein the cell is feeded directly with the photographic effluent flowing out of a photographic processing machine.

9. A process according to any of the preceding claims wherein the electrolyte non-recycled part can be reused in the photographic process.

## Patentansprüche

1. Verfahren zur elektrolytischen Entsilberung von photographischen Abwässern, das die Stufe der Zirkulierung der photographischen Abwässer durch eine elektrolytische Zelle umfaßt, in der das elektrische Feld senkrecht zur Richtung der Zirkulierung des Elektrolyten verläuft, mit mindestens einer anodischen Abteilung und einer kathodischen Abteilung, wobei der Elektrolyt in der kathodischen Abteilung zirkuliert wird, um Silber durch elektrolytische Reaktionen wiederzugewinnen,
dadurch gekennzeichnet, daß mindestens ein Teil des Elektrolyten, der das kathodische Abteil verläßt, in das anodische Abteil rezirkuliert wird, bevor der Elektrolyt in den Abwasserkanal abgelassen wird.

2. Verfahren nach Anspruch 1, bei dem die elektrolytische Zelle eine perkolierte Zelle mit einer porösen Elektrode ist.

3. Verfahren nach Anspruch 1 oder 2, bei dem die elektrolytische Zelle eine Impuls-beaufschlagte und perkolierte Zelle mit einer porösen Elektrode ist.

4. Verfahren nach Ansprüchen 1, 2 oder 3, bei dem die Stromdichte im Bereich von 100 bis 500 A/m² liegt.

5. Verfahren nach Anspruch 4, bei dem die Stromdichte im Bereich von 150 bis 350 A/m² liegt.

6. Verfahren nach einem der vorstehenden Ansprüche, bei dem das photographische Abwasser ein Fixierbad ist.

7. Verfahren nach einem der vorstehenden Ansprüche, bei dem das photographische Abwasser ein Bleich-Fixierbad ist.

8. Verfahren nach einem der vorstehenden Ansprüche, bei dem die Zelle direkt mit dem photographischen Abwasser gespeist wird, das aus einer photographischen Entwicklungsvorrichtung ausfließt.

9. Verfahren nach einem der vorstehenden Ansprüche, bei dem der nicht-recyclisierte Teil des Elektrolyten wieder in dem photographischen Verfahren verwendet wird.
